# EUROPEAN PATENT APPLICATION

(11) **EP 1 109 124 A2**
(43) Date of publication of application: **20.06.2001**
(21) Application number: 00127540.3
(22) Date of filing: 15.12.2000
(51) Int. Cl.: G06K 9/00, H04N 1/411, G06T 9/00, G06K 9/20

(54) **Method and apparatus for image data processing and computer program product used therein**

(30) Priority: 17.12.1999 JP 35924899
(71) Applicant: MATSUSHITA ELECTRIC INDUSTRIAL CO., LTD., Kadoma-shi, Osaka 571-8501 (JP)
(72) Inventor: Hata, Koichi, Katano-shi, Osaka 576-0021 (JP); Tada, Hiroyuki, Kawasaki-shi, Kanagawa 214-0022 (JP)
(74) Representative: Grünecker, Kinkeldey, Stockmair & Schwanhäusser Anwaltssozietät

(57) **Abstract**

Disclosed here is a method and an apparatus for a structured image data processing, and a computer program product used therein. This allows structured image data information to be effectively transmitted and stored, keeping the quality of the information as perfect as possible. When structured image data and region data are entered, the routine firstly determines a region to be divided of document-image data. Structured image data includes image data and corresponding positioning data, while region data indicates the inner structure of image data by regions. Received the input data, the routine divides the document-image data into plural portions according to information on the region to be divided. Then each portion of the document image is processed suitable for its region characteristics. Then, the structured image data is renewed by replacing the positioning data and image data before processing with ones after processing.

## Description

### Field of the Invention

The present invention relates to a method and apparatus for image data processing, and a computer program product used therein, for transmitting and storing structured image data effectively with a minimal loss of information quality.

### Background of the Invention

Conventionally, a data amount control for optimum image quality described below has been performed to effectively transmit and store information including document-image data and its positioning data, i.e., structured image data.

Herein, "document-image data" means what includes text data, and data of image such as photograph, illustration, graphics and lines. Besides, in the document image, texts may exist on an image.

The positioning data contains the starting coordinate of the document-image data, and the width and height of the image.

The positioning data is represented by Hyper Text Markup Language (HTML)-written data.

The data amount control described above is performed at a server transmitting structured image data or at a relay node relaying the transmission. In the processing, (i) decreasing the size of document-image data in reduced image data; (ii) subtracting the number of colors; and (iii) omitting the image data from transmission by replacing the image data with the text data added thereto.

These processes are called Internet Transcoding for Universal Access. The references below have descriptions of changing the size of image data at a relay node relaying HTML-written data, and of converting colored image into grayed image or black-and-white image:
Reference 1: *R. Han, P. Bhagwat, "Dynamic Adaptation in an Image Transcoding Proxy for Mobile Web Browsing", IEEE Personal Communications Magazine, Dec. 1998, pp. 8-17.*
Reference 2: *J. R. Smith, R. Mohan, C. -S. Li, "Content-based Transcoding of images in the Internet," Proceedings of the International Conference on Image Processing (ICIP), 1998.*

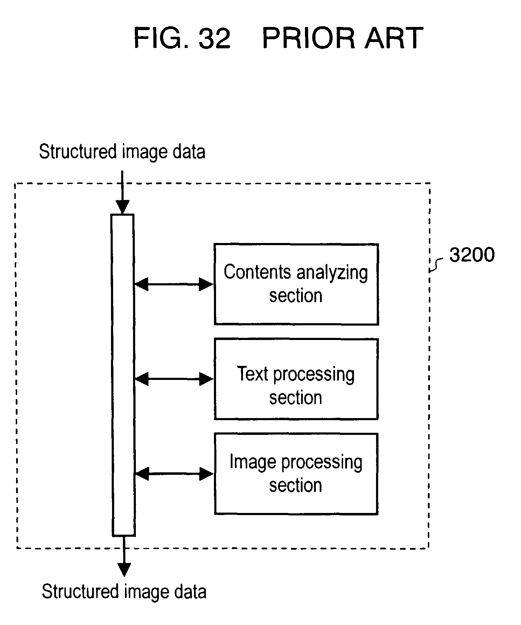

Fig. 32 is a block diagram of a conventional processing apparatus 3200.

According to the method, the processes for document-image data and corresponding positioning data, for example, scaling down the size of image data, and reducing the number of colors, are performed at a uniform rate.

That is, given an image including both of a text region and a photograph region, the conventional processing would perform "across-the-board" size reducing or color reducing.

Suppose that here is a document image captured by a scanner from an article including a text and chart-contained region and a photograph-contained region. Subjected to the color reducing process, the text and chart region in the document image can be recognized without much effort after the process. However, it could be difficult to identify what it is in the photograph region in the document image.

On the other hand, subjected to the size reducing process, the photograph region in the document image can be interpreted as it is after the process. However, it could no longer identify what they are in the text and chart region because, for example, the character or chart-forming segments are broken due to the size reducing.

### Summary of the Invention

The present invention addresses the problems above. The object of the invention is to provide an improved data amount control processing for obtaining an optimal image quality of document-image data, such that a text and figure-contained region and a photograph-contained region are processed suitable for region characteristics.

In the present invention, "document-image data" means what includes text data, and data of image such as photograph, illustration, graphics and lines. Besides, in the document image, texts may exist on an image.

The structured image data processing method of the present invention has the steps below. The method employs tree-structured input data that contains structured image data including document-image data and its positioning data, and region data indicating the inner structure of document-image data by plural regions.

The steps for the processing are:
(a) determining the regions to be divided in the document-image data according to predetermined dividing information, in response to data input;
(b) dividing the document-image data into plural portions according to the regions to be divided;
(c) processing individually each portion of the document-image data; and
(d) renewing the document-image data by replacing the document-image data and the positioning data before processing with ones after processing.

Similarly, the structured image data processing apparatus has the means below. The apparatus processes tree-structured input data that contains structured image data including document-image data and its positioning data, and region data indicating the inner structure of document-image data by plural regions.

The means for the processing are:
(a) determining the regions to be divided in the document-image data according to predetermined dividing information, in response to data input;
(b) dividing the document-image data into portions according to the regions to be divided;
(c) processing individually each portion of the document-image data; and
(d) renewing the document-image data by replacing the document-image data and the positioning data before processing with ones after processing.

The computer program product of the present invention executes the structured image data processing method described above.

The present invention can be summarized as follows.
(1) adding region data to structured image data to be restored and transmitted, and divides document-image data into plural portions by region according to the region data-added image data to generate divided document-image data.
(2) performing a data amount control suitable for each portion of document-image data, and generates positioning data for the renewed image data, using the region data.

Through these processes, the present invention provides an improved image data processing method and apparatus, and computer program product, allowing information of structured image data to be effectively transmitted and stored with little loss of quality of the transmitted data.

### Brief Description of the Drawings

Fig. 1 shows a structured image data processing unit in accordance with a first preferred embodiment of the present invention.

Fig. 2 illustrates the structure of input data in accordance with the first embodiment of the present invention.

Fig. 3 is an example of a document image represented in the form of tree-structured data.

Fig. 4 is a flow diagram of the divided image-determining step.

Fig. 5 shows a region to be divided.

Fig. 6 illustrates how the image-dividing section works.

Fig. 7 illustrates how the image-processing section works.

Fig. 8 illustrates how the structured image data renewal section works.

Fig. 9 illustrates a structured image data processing unit in accordance with a second preferred embodiment of the present invention.

Fig. 10 illustrates the structure of input data in accordance with the second embodiment of the present invention.

Fig. 11 illustrates score data.

Fig. 12 illustrates a structured image data processing unit in accordance with a third preferred embodiment of the present invention.

Fig. 13 illustrates the structure of input data in accordance with the third embodiment of the present invention.

Fig. 14 illustrates how the text-replacing section works.

Fig. 15 illustrates how the structured image data renewal section works in accordance with the third preferred embodiment of the present invention.

Fig. 16 illustrates a structured image data processing unit in accordance with a fourth preferred embodiment of the present invention.

Fig. 17 illustrates the structure of the first input data in accordance with the fourth preferred embodiment.

Fig. 18 illustrates the structure of the second input data in accordance with the fourth preferred embodiment.

Fig. 19 shows the overlapped region of two document images.

Fig. 20 shows the overlapped region of two types of tree-structured data.

Fig. 21 illustrates how the image-dividing section works.

Fig. 22 shows renewed tree-structured data.

Fig. 23 shows combined tree-structured data.

Fig. 24 shows combined structured image data.

Fig. 25 illustrates a structured image data processing section in accordance with a fifth preferred embodiment of the present invention.

Fig. 26 shows an example of document-image data layout.

Fig. 27 shows a description of the tree-structured data representing the document image in Fig. 26.

Fig. 28 shows another description of the tree-structured data representing the document image in Fig. 26.

Fig. 29 shows still another description of the tree-structured data representing the document image in Fig. 26.

Fig. 30 illustrates a structured image data processing unit in accordance with a sixth preferred embodiment of the present invention.

Fig. 31 illustrates the whole of the structured data processing apparatus of the present invention.

Fig. 32 shows a conventional processing apparatus.

### Description of the Preferred Embodiments

Prior to explanations of respective embodiments, explanations will be made on the whole structure that realizes the method, apparatus and computer program product of the present invention.

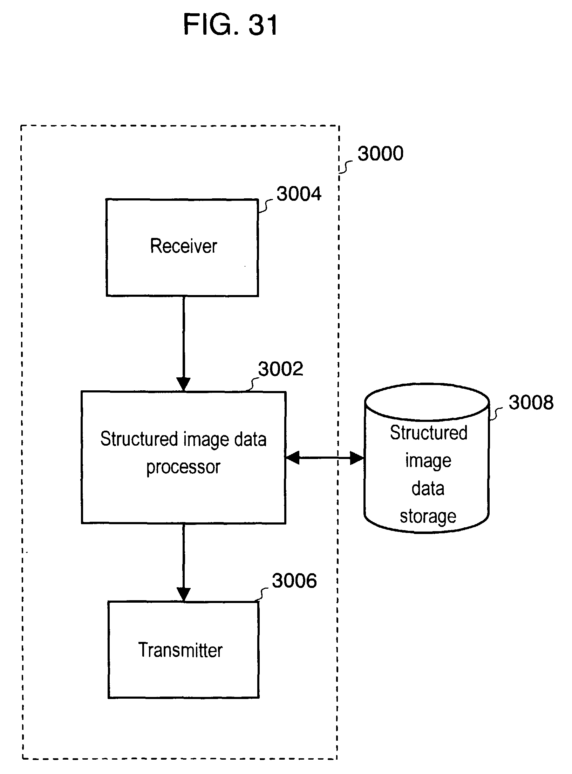

In Fig. 31, a structured image data processing apparatus 3000 of the present invention includes structured image data processor 3002, receiver 3004 and transmitter 3006. Processor 3002 processes structured image data input from receiver 3004, and outputs the processed structured image data to transmitter 3006. Receiver 3004 receives data from a network and the like. Transmitter 3006 transmits the data to a network and the like.

Besides, processor 3002 is able to acquire structured image data from structured image data storage 3008 and output the processed structured image data to the storage 3008 to store it.

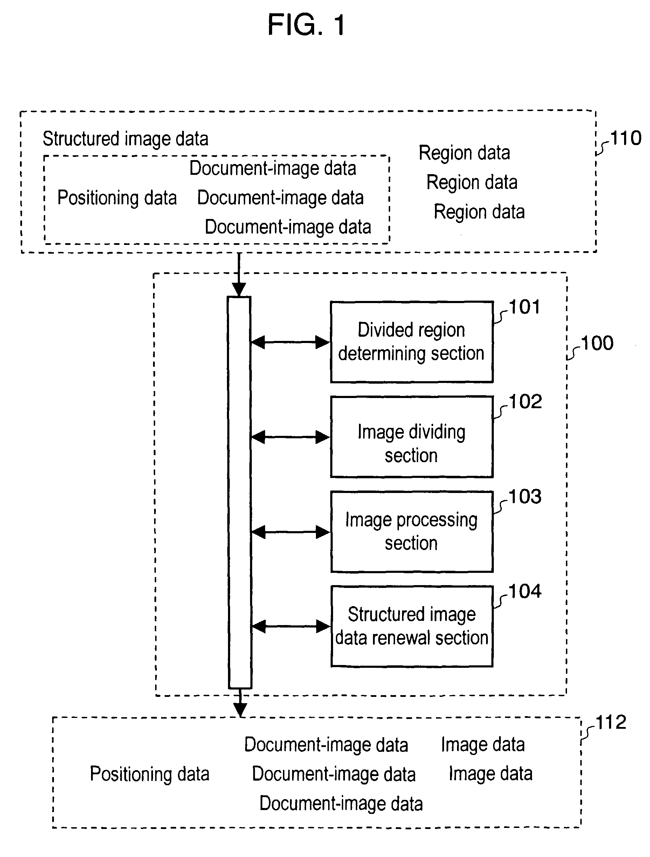

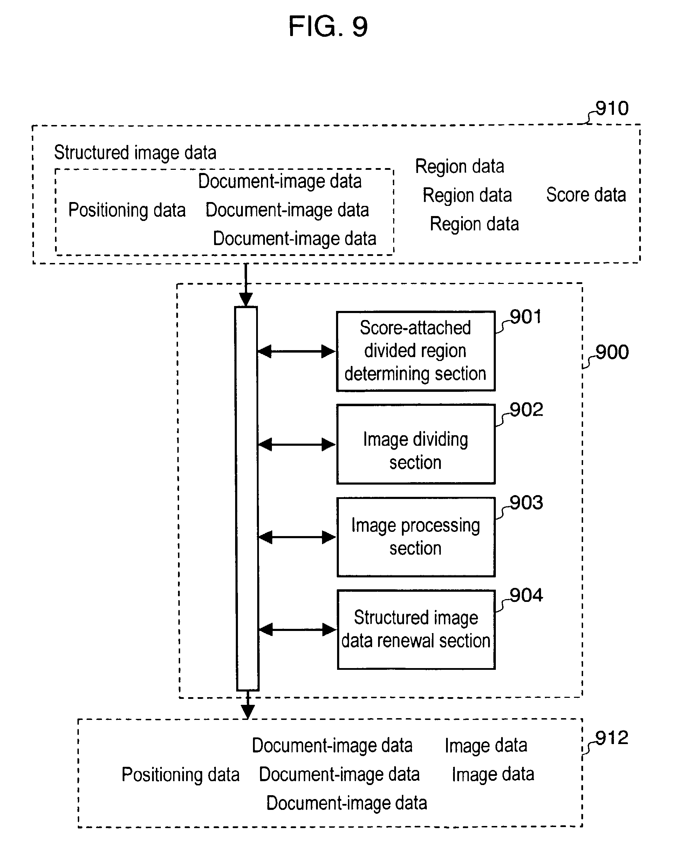

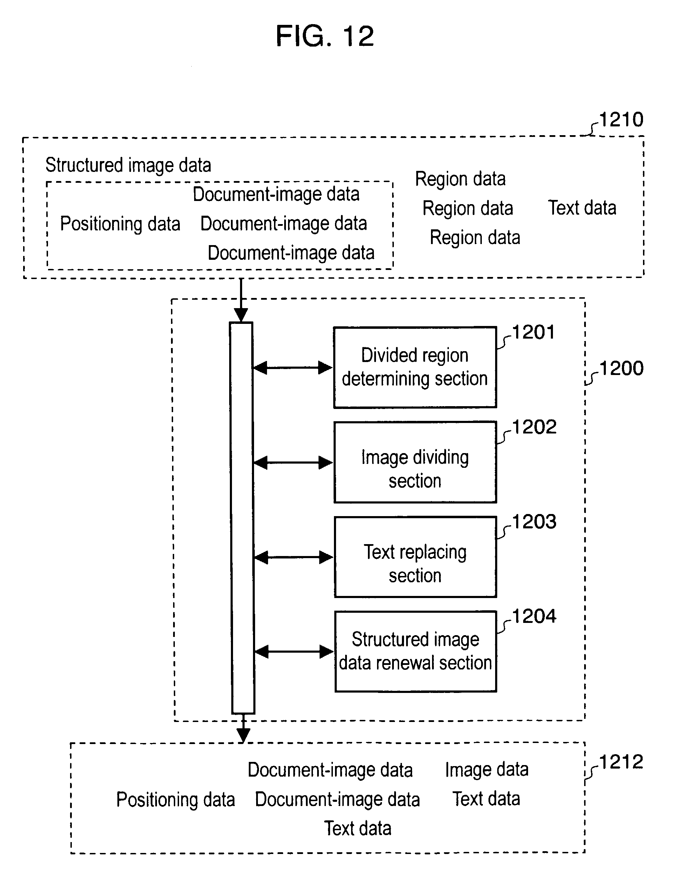

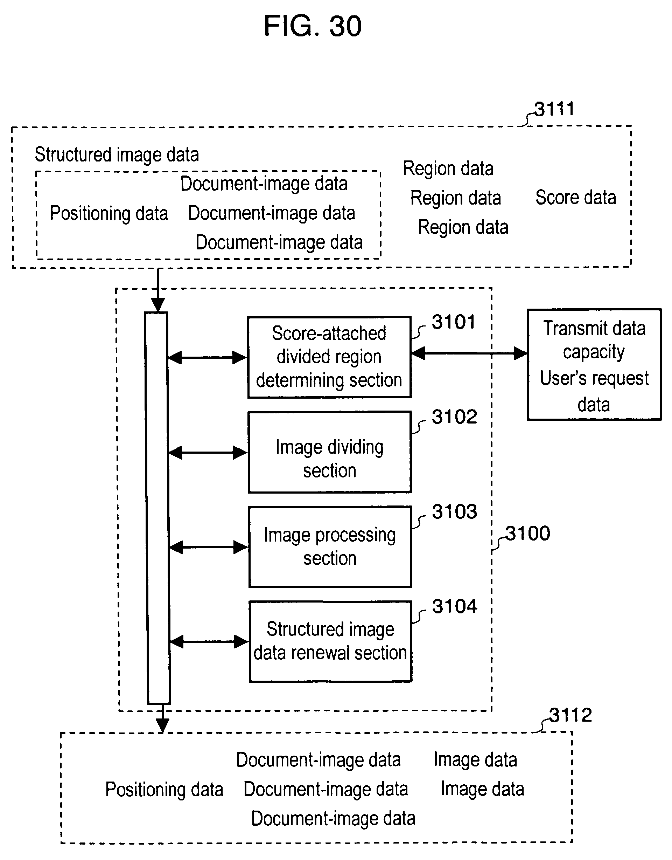

In the following embodiments, the processing in the structured data processing unit are explained. In the embodiments, structured data processor 3002 corresponds to the processing unit 100 in Fig. 1, the processing unit 900 in Fig. 9, the processing unit 1200 in Fig. 12 and the processing unit 3100 in Fig. 30.

In the following embodiments, "document-image data" means what includes text data, and data of image such as photograph, illustration, graphics and lines. Besides, in the document image, texts may exist on an image.

The preferred embodiments of the present invention are described hereinafter with reference to the accompanying drawings.

### First preferred embodiment

Fig. 1 is a block diagram illustrating image data processing unit 100 in accordance with the first preferred embodiment of the present invention. The embodiment will be explained, supposing that the input data 110 to be used is tree-structured and; includes structured image data composed of document-image data and its positioning data and region data indicating the structure of each document image by regions. The positioning data contains the starting coordinate, and the width and height of the document-image. And supposing that the process employs dividing information that determines the region to be divided of the document-image data, other than the input data. The structured image data includes document-image data, and corresponding positioning data that contains the starting coordinate of the document-image data and the widths and heights of the document image.

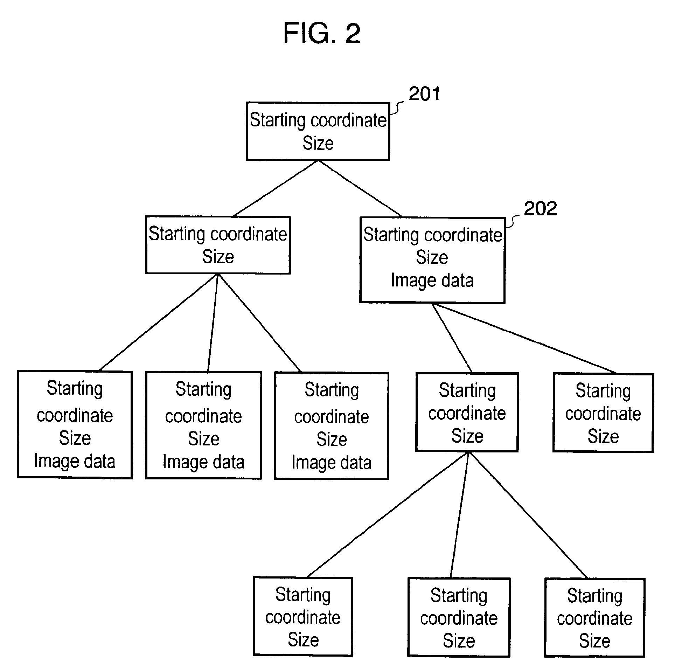

Fig. 2 illustrates the structure of input data.

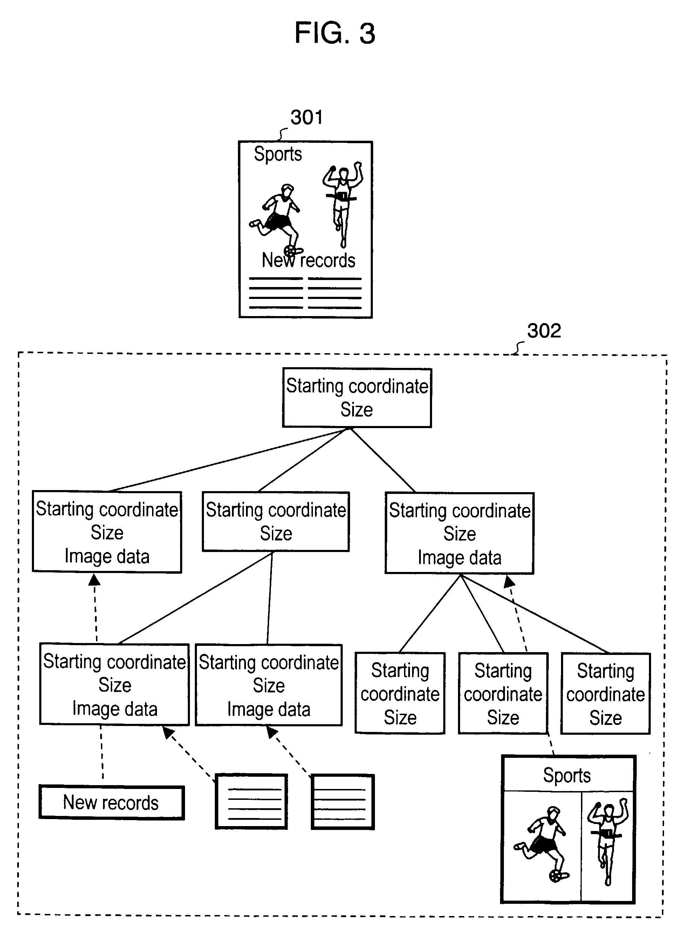

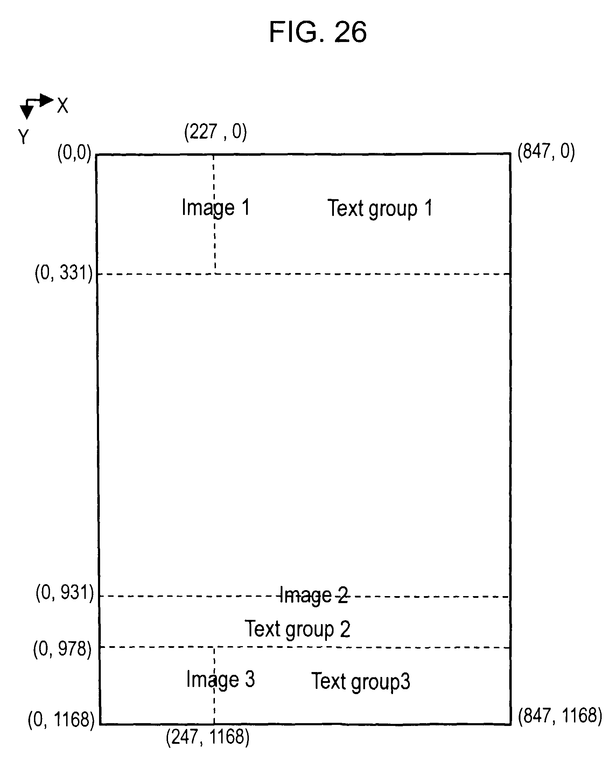

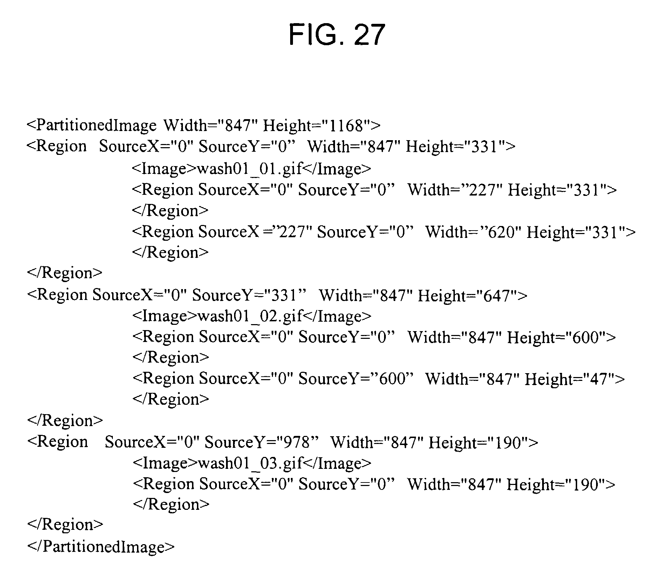

Fig. 3 shows a description of tree-structured data 302 representing document image 301. Fig. 27 will be more specific, where document image example 2600 shown in Fig.26 is described as tree-structured data. The document image in Fig. 26 includes "Text group 1", "Text group 2", "Text group 3", "Image 1", "Image 2" and "Image 3".

Besides, in the document image in Fig. 26, a group of text may exist on an image like overlapping, and vice versa. For example, "Text group 2" may overlap on "Image 2".

In Fig. 27, character strings sandwiched between < and > represent positioning data.

"SourceX= " and "SourceY= " indicates the starting coordinate. "Width= " and "Height= " represents the area. Given the starting coordinate and the area, the image data sandwiched between <Image> and </Image> is positioned. Text data may be inserted, for example, by being sandwiched between <Text> and </Text>, as described later. As shown in Fig. 27, at first, an area is defined by determining with "Width=847" and "Height=1168". Then the areas are defined successively layered-like, namely in tree structure by setting their starting points and areas so as to place images and text data.

The input data shown in Fig. 2 forms a tree structure in which element 201 representing a region is chained like the shape of a tree. The input data contains document image data-attached element 202. In element 202, a document image is added to at least one region. In such a data structure, element 201, which is positioned higher than element 202, is the positioning data of the document-image data, and an element positioned lower than the document-image data attached element serves as region data that shows where the region is in the image.

In Fig. 1, divided region determining section 101 determines the region to be divided of the document image according to dividing information, which will be described later. Accordingly, image-dividing section 102 divides the document-image data into at least one portion of the document-image data.

Image processing section 103 individually processes each portion of the document-image data divided in the section 102.

Structured image data renewal section 104 replaces the document-image data and its positioning data before dividing process with the divided ones to renew the structured image data, then outputs the renewed document-image data 112.

Hereinafter, how the structured image data processing works will be discussed in detail by section.

When structured document-image data 301 shown in Fig. 3 is entered, divided region determining section 101 determines the region to be divided of the document-image data. Then the section 101 determins the regions by dividing the data 301 into the regions as shown in the tree structured data 302 and performs color reducing process below. In the embodiment, firstly the document-image data is subjected to the color reducing process to obtain the difference between the state after the process and the state before the process. The result from comparing the difference with a predetermined value is used as dividing information.

Dividing information having the size or the position of a region as a dividing factor may be also effective to determine which region is to be divided.

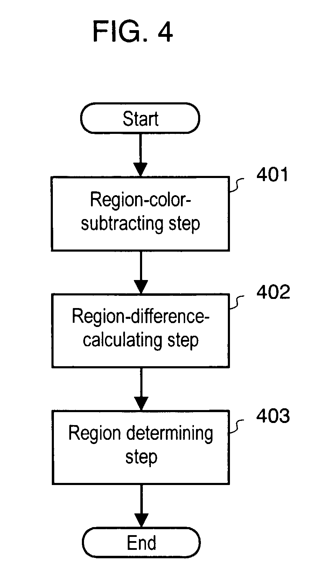

Fig. 4 is a flow diagram illustrating the routine of divided region determining section 101.

In Fig. 4, region-color-subtracting step 401 performs the color reducing process on the document-image data corresponding to the region data. For example, (i) the document-image data having 24-bit colors is reduced to 8-bit colors by the process, and (ii) the data having 8-bit colors is reduced to 1-bit colors. Color-reducing process is performed such that a color histogram is sorted according to an index arranged into one-dimensional array, then divided (see *ppmquant.c* written by *J. Poskanzer,* contained in the *netpbm* package of *Public Domain Software*.)

Region-difference-calculating step 402 sums the square of the difference between the state of the document-image data before processing and the data after processing, and determines the calculation result as an evaluation value.

Region determining step 403 compares the evaluation value with a predetermined value. If the evaluation value is smaller than the predetermined value, the step 403 determines that the region is to be divided.

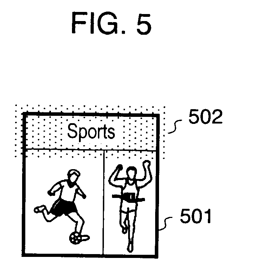

Through the procedures above, as shown in Fig. 5, text region 502, which is crosshatched in document-image data 501, is determined as a region to be divided.

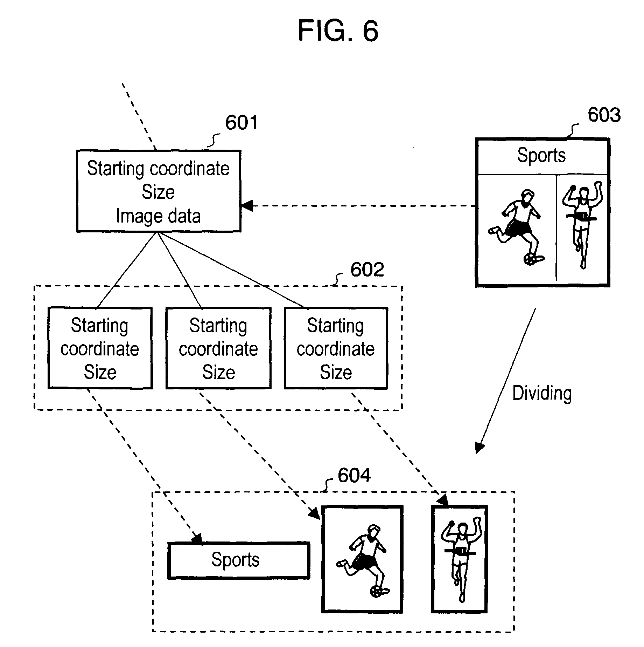

Image-dividing section 102 divides the document-image data according to the region determined by the section 101. Fig. 6 illustrates how the document image is divided.

In the tree-structured data shown in Fig. 6, divided document-image data 604 is generated in such a way that document-image data 603-attached element 601 is divided so as to correspond with the region of sub-element 602, i.e. the region data.

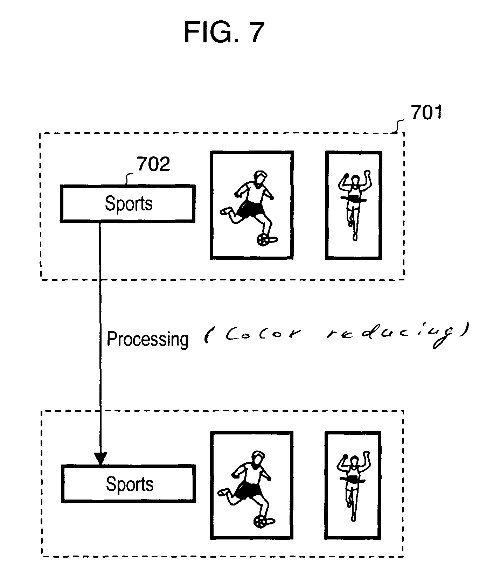

Fig. 7 shows the document image process in image processing section 103. In divided document-image data 701 shown in Fig. 7, the section 103 performs the color-reducing process on the text region in the document-image data corresponding to region 702, which is the region determined to be divided in the section 101.

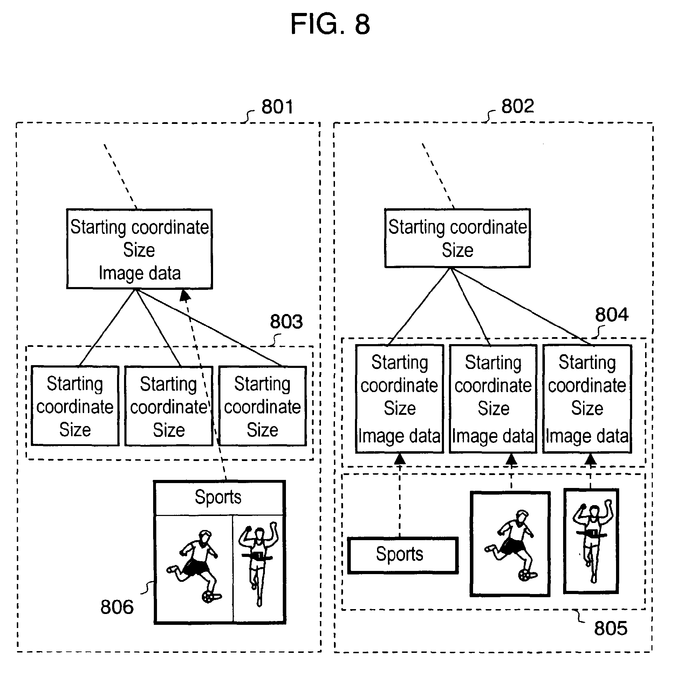

Fig. 8 shows how the document image is renewed in structured image data renewal section 104.

The section 104, as shown in Fig. 8, replaces region data 803 for the divided region with positioning data 804, and adds divided document-image data 805 to positioning data 804 to renew the structured image data before processing.

Tree-structured data is renewed through the following procedures.
(1) removing document-image data 806 from tree-structured data 801 before processing (which corresponds to image 501 in Fig. 5); then
(2) adding divided document-image data 805 to positioning data 804 to obtain renewed tree-structured data 802 after processing.

The embodiment, as described above, suitably processes each document image region, which has divided document image based on the region data indicating the structure of the document image by region, then derives the positioning data from the region data. These procedures allow structured image data information to be effectively transmitted and stored, keeping the quality of the information as perfect as possible.

### Second Preferred Embodiment

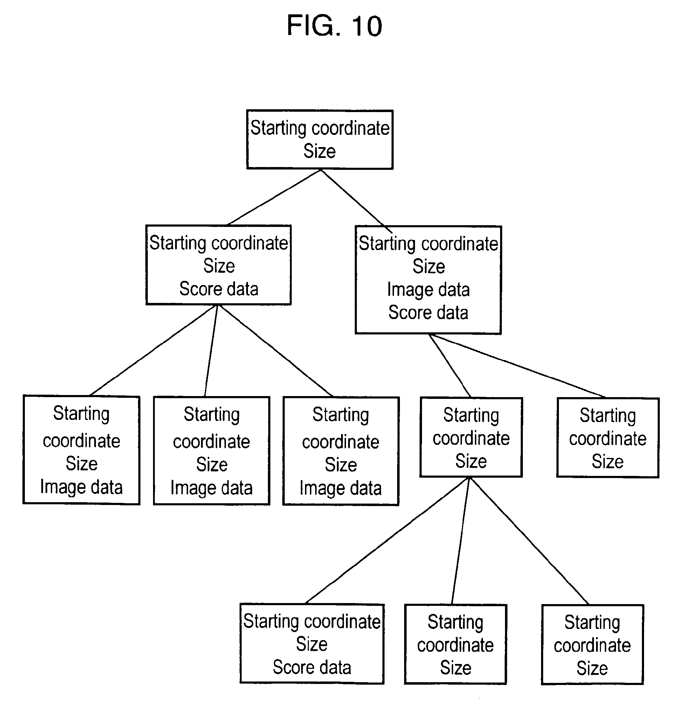

Fig. 9 is a block diagram illustrating the procedures of the structured image data processing unit 900 in accordance with the second preferred embodiment of the present invention. In the embodiment, the input data 910 to be used contains structured image data, score data, and region data indicating the structure of each document image by regions. As described earlier, the structured image data includes document-image data and corresponding positioning data. The input data of the embodiment, as shown in Fig. 10, is tree-structured, as well as one described in the first preferred embodiment. The structure shown in Fig. 10 differs from the one in Fig.1 of the first embodiment, in that score data is added, as well as document-image data, to an element.

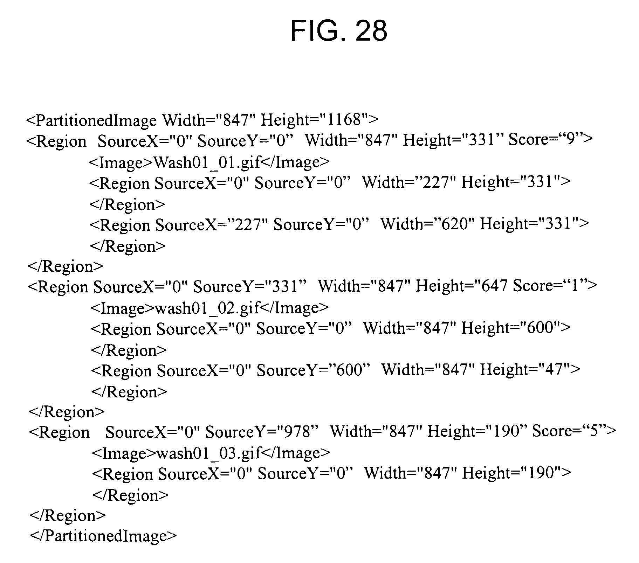

Fig. 28 will be more specific, which shows a coded description of the tree structure of the document image shown in Fig.26. The description in Fig. 28 differs from the description in Fig. 27 in that score data, Score = "X" (X takes on a numeral) is added to character strings that are sandwiched between <'s and >'s.

The score data contains an importance of image, and an identifier for region characteristics indicating a type of the region, such as a text and chart region, and a photograph region.

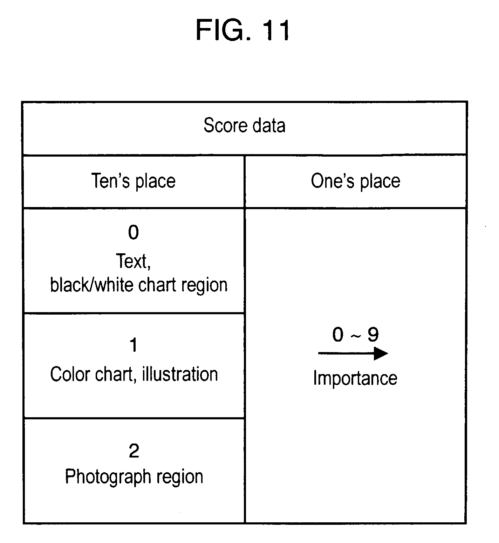

In the embodiment, using the numbers 0 to 9, the importance of image is represented at the one's place of the score data, and the region-characteristics identifier is represented at the ten's place. Fig. 11 is a table illustrating the structure of the score data, showing the type of the region characteristics and the degree of the importance.

In Fig. 9, score-attached divided region determining section 901 uses score data as dividing information and determines the region to be divided of the document image.

Accordingly, image-dividing section 902 divides the document-image data into at least one portion of the document-image data.

Image processing section 903 individually processes each portion of the document-image data divided in the section 902.

Structured image data renewal section 904 replaces the document-image data and its positioning data before dividing process with the divided ones to renew the structured image data, then outputs the renewed document-image data 912.

Hereinafter, the procedures of the structured image data processing of the embodiment will be discussed in detail by section. As for the same procedures as ones in the first embodiment, the explanation will be omitted.

When the tree-structured data shown in Fig. 10 is entered, score-attached divided region determining section 901 determines the region to be divided of the document-image data, using the score data. In the embodiment, a predetermined value indicating the degree of importance is defined as the reference used in the determining section. When the score data added to a region has lower degree of importance than the reference value, the section determines the region is to be divided.

Image-dividing section 902 works in the same way as the section 102. In image processing section 903, regions are differently processed depending on the region characteristics: the two-colors reducing process is done for text, black/white chart regions, the 256-colors reducing process is for color chart, illustration regions, and the scale-down process for photograph regions

Structured image data renewal section 904 works like the section 104 does.

According to the embodiment, as described above, the score data added to the region is used with the region data indicating the inner structure of document image for effective processing. Based on the two data, each document image region that has divided document image by region is processed properly, then the positioning data is derived from the region data. These procedures allow structured image data information to be effectively transmitted and stored, keeping the quality of the information as perfect as possible.

### Third Preferred Embodiment

Fig. 12 is a block diagram illustrating the structured image data processing unit 1200 in accordance with the third preferred embodiment of the present invention. In the explanation hereinafter, the same sections as those in the previous two embodiments will be omitted.

In the embodiment, the input data 1210 to be used contains structured image data composed of document-image data and its positioning data, region data indicating the structure of each document image by regions, and text data having summary information on the region.

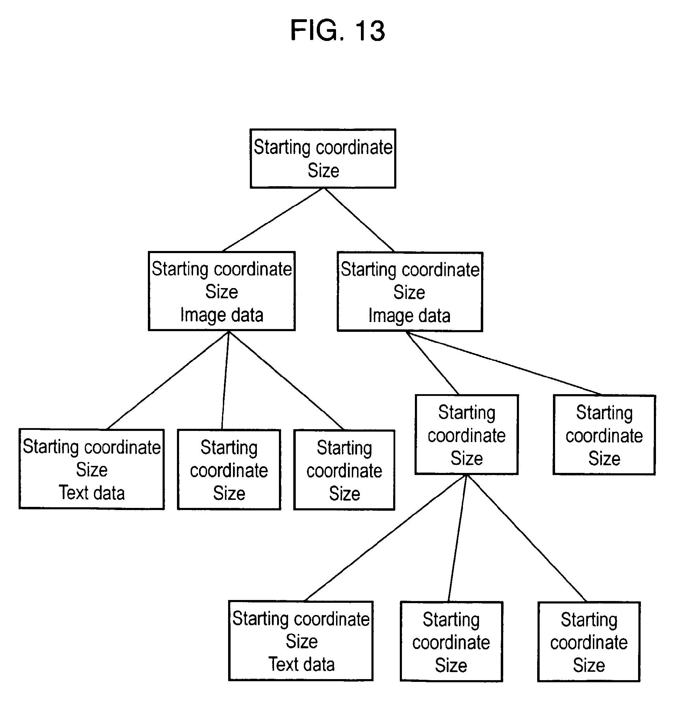

The input data of the embodiment, as shown in Fig. 13, is tree-structured, as well as one described in the first preferred embodiment. The text data, which is added to an element as well as the document-image data, provides a brief description of the image or summarizes the contents of the image. The text data is used for indicating the contents of the image instead of displaying the image.

For that reason, text serves as dividing information and replaced media. Suppose that text is named as replaced media dividing information. The replaced media may contain graphics instead of text.

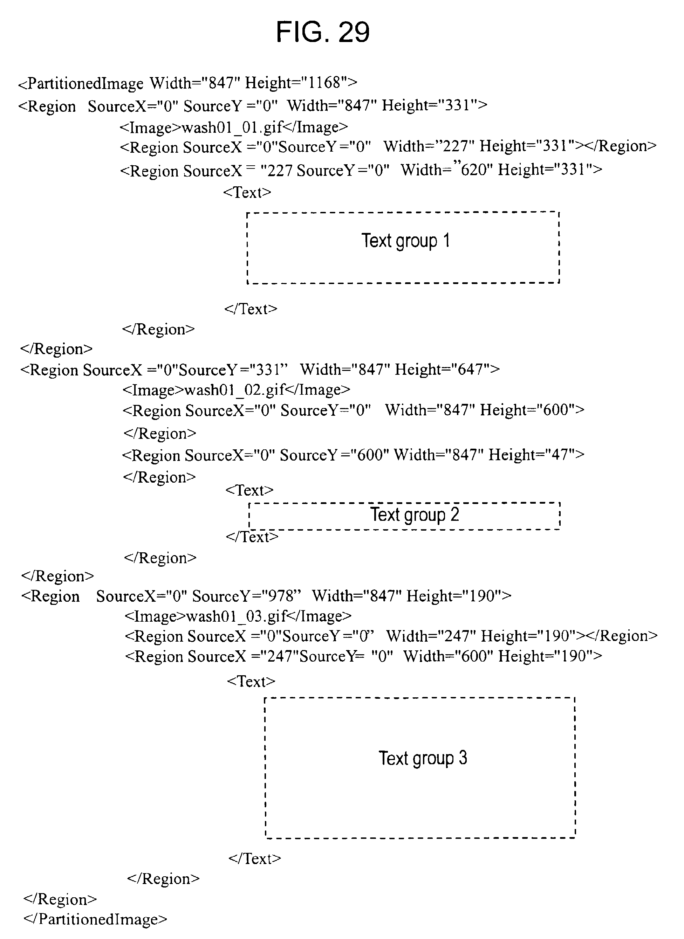

Fig. 29 will be more specific, which shows a coded description of the tree structure of the document image shown in Fig.26. The description in Fig. 29 differs from the description in Fig. 27 in that text data is added between "</Text>" and "</Text>" with image data. The image data may be removed so that the text data is to be the additional data.

In Fig. 12, divided region determining section 1201 determines the region to be divided of the document image according to dividing information that will be described later.

Accordingly, image-dividing section 1202 divides the document-image data into at least one portion of the document-image data corresponding to the regions divided in the section 1201.

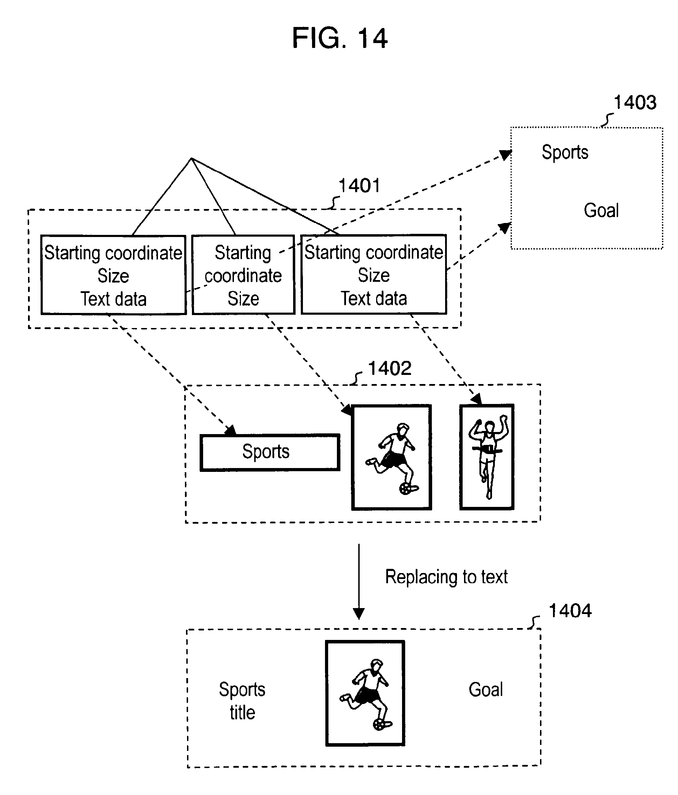

As shown in Fig. 14, text replacing section 1203 replaces image data 1402, which is added to the region corresponding to the divided document-image data processed in the section 1202, with the text data describing the contents of image data 1402.

Structured image data renewal section 1204 replaces the document-image data and its positioning data before dividing process with the divided document-image data, positioning data, and text data to renew the structured image data, then outputs the renewed document-image data.

Now will be described how the structured image data processing method of the embodiment works. As for the same processes as those in the first preferred embodiment, the explanation will be omitted.

When the tree-structured data shown in Fig. 13, divided region determining section 1201 determines the region to be divided. In the embodiment, the section 1201 determines any region to which text data added.

Image-dividing section 1202 works like the section 102 does. Fig. 14 illustrates a text-replacing section in which divided document-image data is replaced with text data.

In Figs. 12 and 14, text-replacing section 1203 (Fig. 12) replaces document-image data 1402, which is divided into each element 1401 in image-dividing section 1202 (Fig. 12), with text data 1403 added to each element to generate image data and text data 1404.

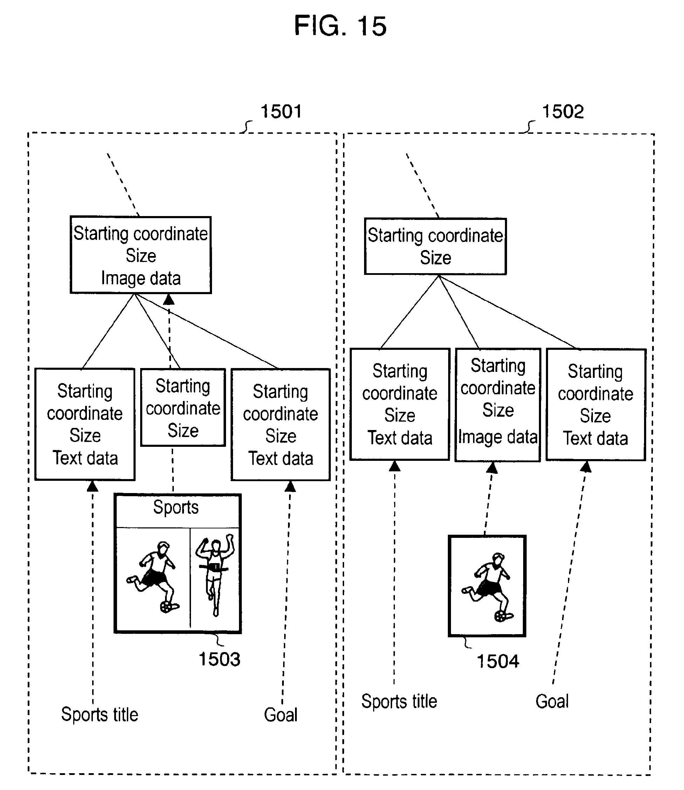

Fig. 15 illustrates how the document image is renewed in the structured image data renewal section. Structured image data renewal section 1204 shown in Fig. 12 removes document-image data 1503 in Fig. 15 from tree-structured data 1501, then adds divided image data 1504 to the region having no text data in divided document image. The tree-structured data is thus renewed as tree-structured data 1502.

In this way, using the region data indicating the inner structure of the document image by regions and text data added to the region, the routine of the embodiment firstly divides the document image by region. Then the routine adds text data, instead of image data, to the region corresponding to the divided document-image data, and derives the positioning data from the region data. Thus, the routine allows structured image data information to be effectively transmitted and stored, keeping the quality of the information as perfect as possible.

### Fourth Preferred Embodiment

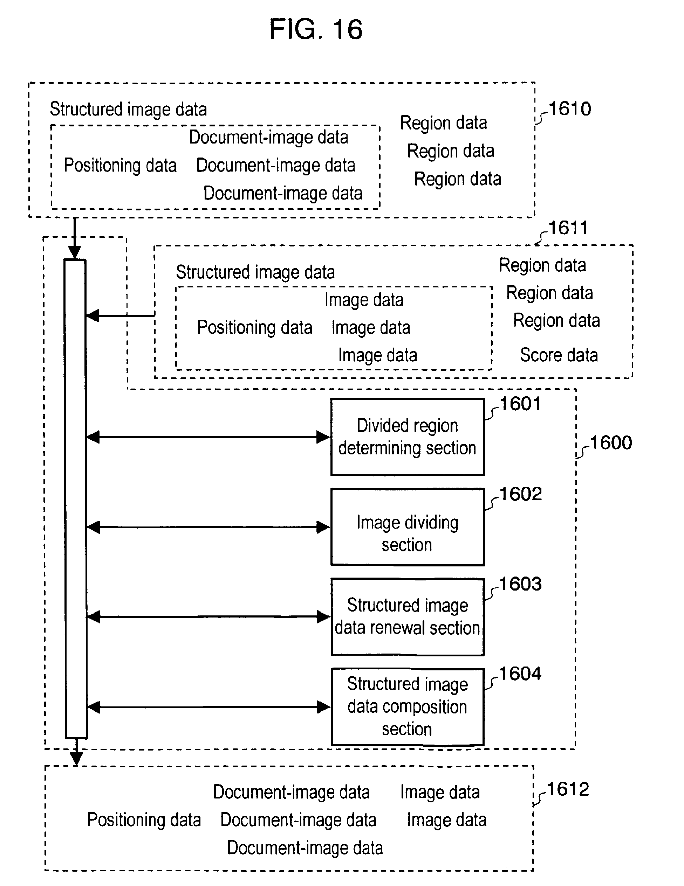

Fig. 16 illustrates the procedures of the structured image data processing unit 1600 in accordance with the fourth preferred embodiment. Hereinafter, for the same steps as those in the first through third embodiments, the explanation will be omitted.

The routine of the embodiment processes plural input data as follows.
1) tree-structured first input data 1610, which contains the first structured image data and the first region data that indicates the structure of the first document-image data by plural regions. The first structured image data is made of the first document-image data and the positioning data corresponding to the document-image data; and
2) tree-structured second input data 1611, which contains the second structured image data and the second region data that indicates the structure of the second document-image data by plural regions. The second structured image data is made of the second document-image data and the positioning data corresponding to the document-image data.

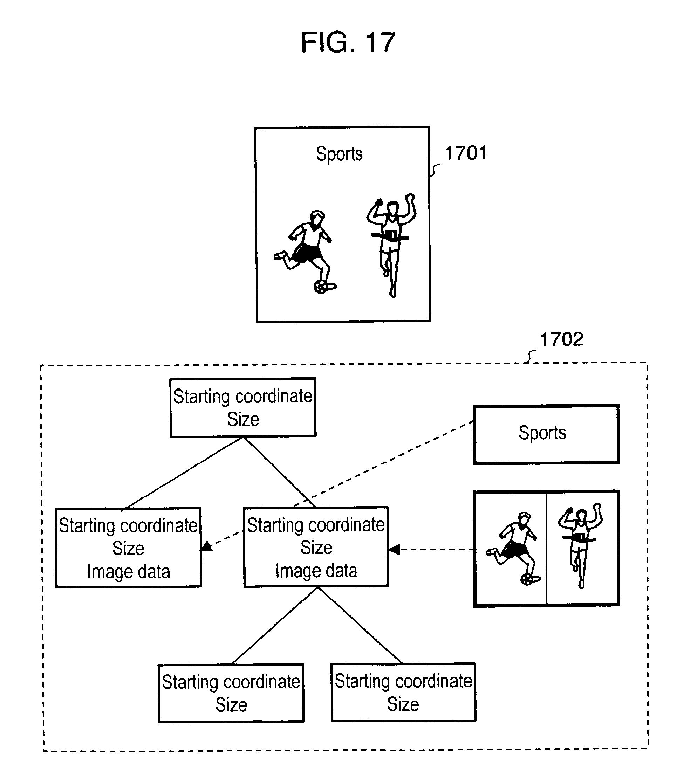

Fig. 17 shows an example in which structured document image 1701 is described in the form of tree-structured data 1702, combined the first structured image data with the first region data.

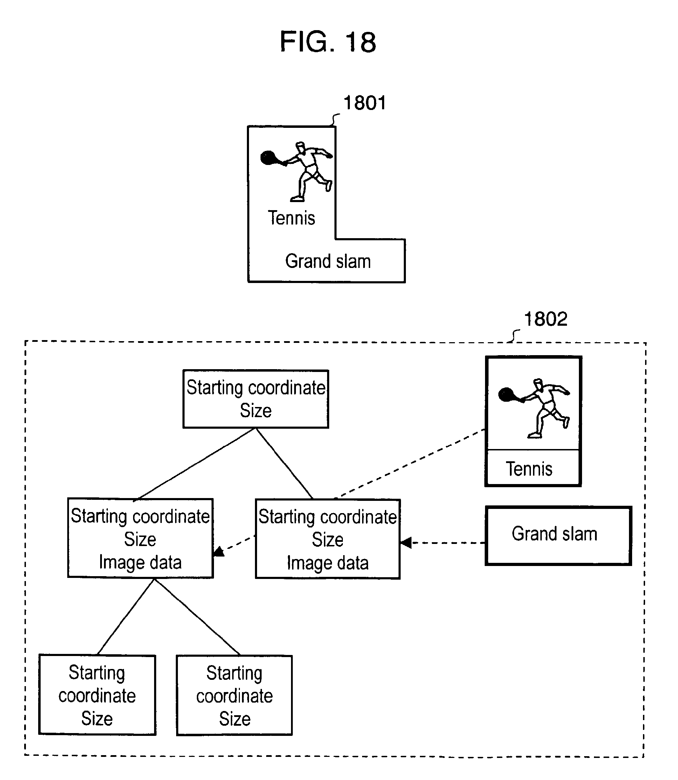

Similarly, Fig. 18 shows an example in which structured document image 1801 is described in the form of tree-structured data 1802, combined the second structured image data with the second region data.

Suppose that tree-structured data 1702 and 1802 are defined as the first and the second input data, respectively.

In Fig. 16, divided region determining section 1601 finds the overlapped region of the document image in the first and the second input data and determines that region to be divided. When the two document-image data have the same starting coordinate and the same size, the section 1601 determines that the two images are overlapped each other.

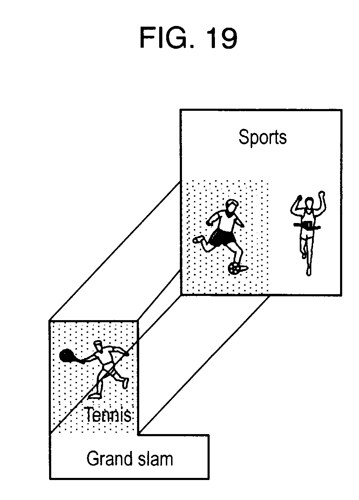

Fig. 19 shows the overlapped region of two document images.

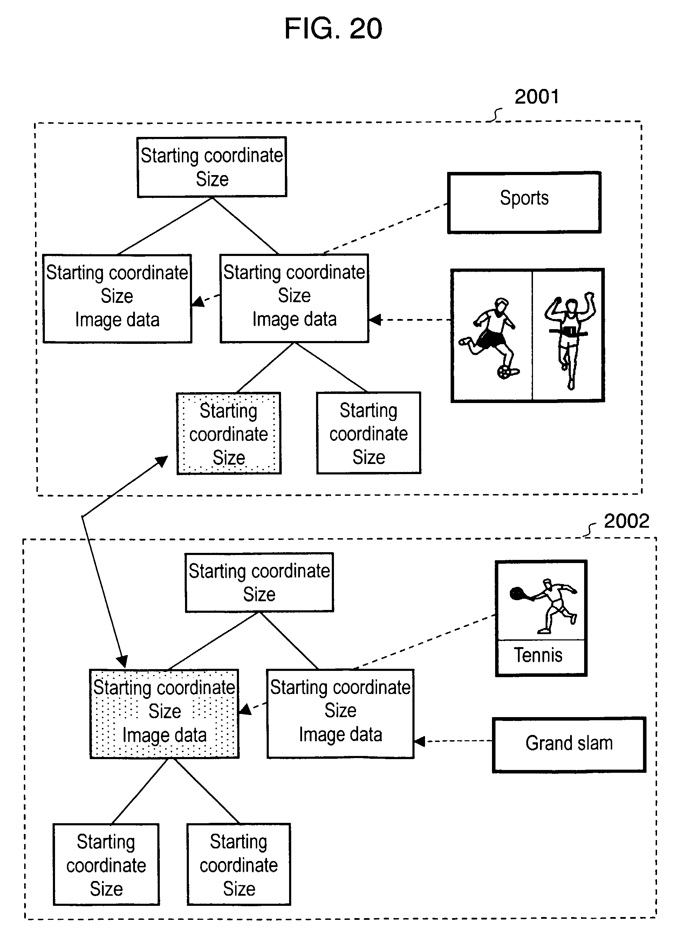

Fig. 20 shows an example in which the overlapped region is found in tree structure of first input data 2001 and tree structure of second input data 2002. The overlapped regions are crosshatched in Figs. 19 and 20.

Image-dividing section 1602 divides the document-image data corresponding to the region to be divided which is determined in the section 1601 into at least one document-image data.

Structured image data renewal section 1603 renews the first structured image data by replacing the first structured image data and the first region data before dividing with the divided document-image data.

Structured image data composition section 1604 combines the first structured image data and the first region data with the second structured image data and the second region data.

Now will be described the procedures of the structured image data processing of the embodiment.

When the first input data and the second input data are entered, divided region determining section 1601 finds the overlapped region and determines the region to be divided.

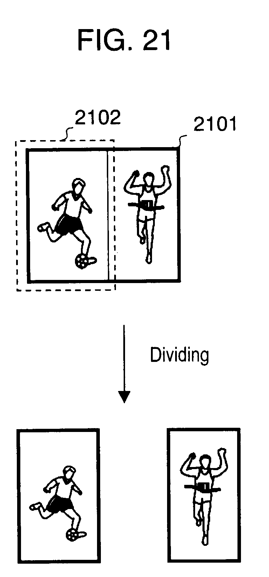

Image-dividing section 1602 works like the section 102 does. Fig. 21 shows how the image is divided. In Fig. 21, to-be-divided region 2102, which is determined in the section 1601, is cut out from document-image data 2101.

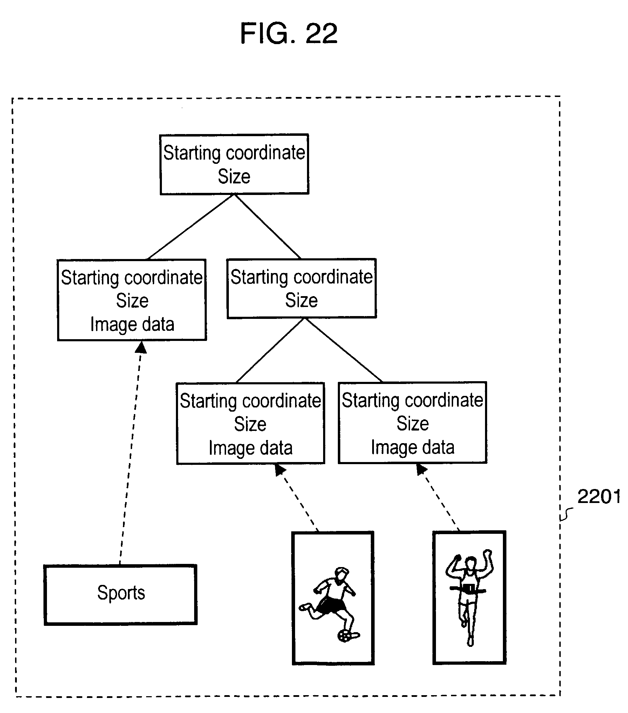

Structured image data renewal section 1603 renews tree-structured data 2001 of the first input data shown in Fig. 20 as tree-structured data 2201 shown in Fig. 22.

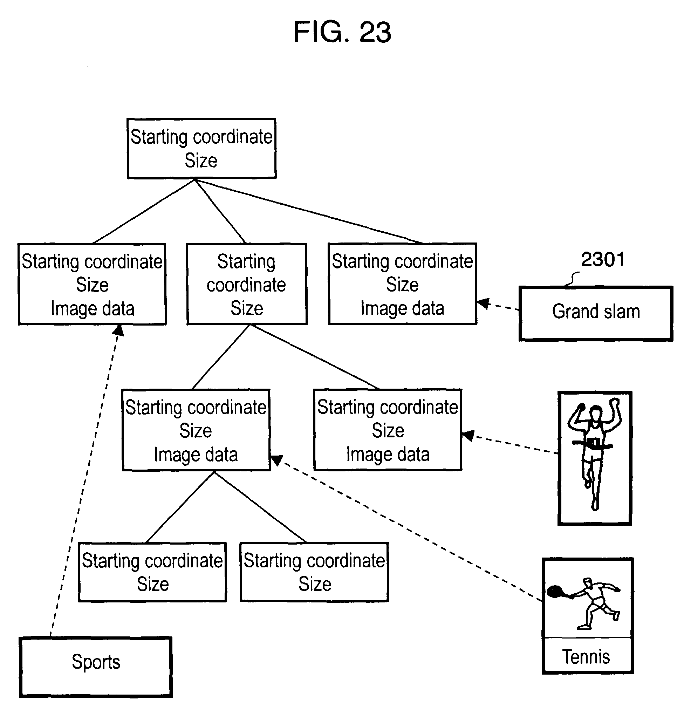

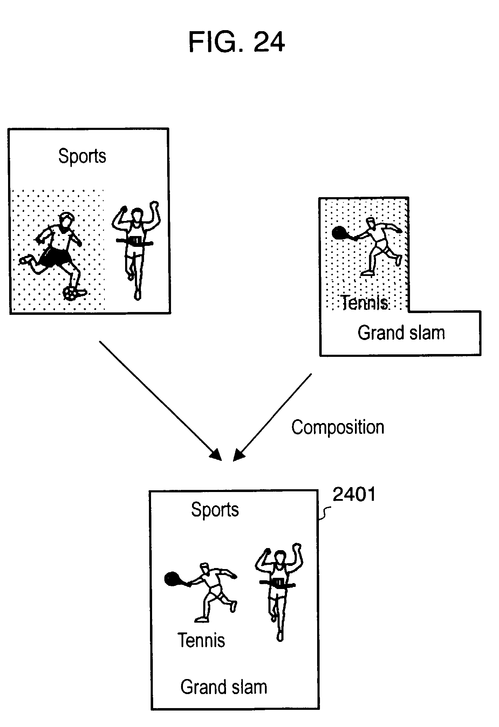

In structured image data composition section 1604, renewed tree-structured data 2201 and the overlapped region in tree-structured data 2002 of the second input data (i.e., document image data-attached element, which is crosshatched in Fig. 20) are replaced with the element of the second input data. Besides, a portion without renewed data (for example, portion 2301 in Fig. 23) is added. Through these procedures, a composite tree-structured in Fig. 23 is composed. The data is output as the structured image data 1612. The structured image data 2401 shown in Fig. 24 is obtained by using the output.

The routine of the embodiment, as described above,
i) divides the document image by region, using region data indicating the inner structure of document-image data by plural regions;
ii) replaces only an overlapped document image region in each composition process; then
iii) derives the positioning data from the region data.

This allows structured image data information to be effectively transmitted and stored, keeping the quality of the information as perfect as possible.

### Fifth Preferred Embodiment

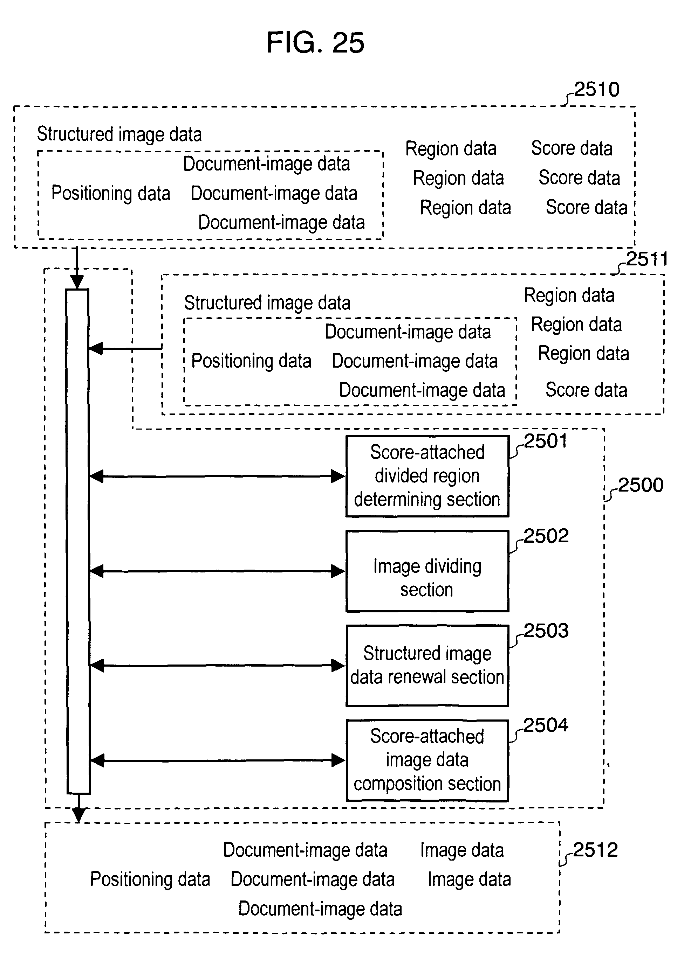

Fig. 25 illustrates the structured image data processing unit 2500 in accordance with the fifth preferred embodiment. Hereinafter, for the same sections as those in the first through fourth embodiments, the explanation will be omitted.

The routine of the embodiment processes plural data input attached score data described below.

The routine of the embodiment processes plural input data as follows.
1) the tree-structured first input data 2510, which contains the first structured image data, the first region data that indicates the structure of the first document-image data by plural regions, and the first score data. The first structured image data is made of the first document-image data and the positioning data corresponding to the document-image data; and
2) the tree-structured second input data 2511, which contains the second structured image data, the second region data that indicates the structure of the second document-image data by plural regions, and the second score data. The second structured image data is made of the second document-image data and the positioning data corresponding to the document-image data

The data structures of the first and the second input data of the embodiment are tree-structured like that shown in Fig. 10.

The score data represents an importance. The embodiment defines that the higher the score data, the more increase the importance.

In Fig. 25, score-attached divided region determining section 2501 determines the region to be divided of the document image according to dividing information that will be described later.

Image-dividing section 2502 divides the document-image data corresponding to the region to be divided into at least one document-image data.

Structured image data renewal section 2503 obtains divided image data by renewing the first structured image data and the first region data.

Score-attached structured image data composition section 2504 combines the first structured image data and the first region data with the second structured image data and the second region data, using the score data.

Now will be described the procedures of the structured image data processing of the embodiment.

In Fig. 25, score-attached divided region determining section 2501, which works like the section 1601 does, finds the overlapped region of the document image in the first and the second input data and determines that region to be divided. When the two document-image data have the same starting coordinate and the same size, the section 2501 determines that the two images are overlapped each other.

Image-dividing section 2502 works in the same way as the section 1602 does.

Structured image data renewal section 2503 also works in the same way as the section 1603 does.

Structured image data composition section 2504 works in almost the same as the section 1604 does. In the section 2504, the overlapped region is replaced only if the second score data corresponding to the region is greater than the first score data.

Through these procedures, the structure image output data 2512 is output.

The routine of the embodiment, as described above,
i) divides the document image by region, using region data indicating the data structure of document image by plural regions;
ii) replaces the document image regions, provided that the regions are overlapped and satisfied the conditions on the score data, in each composition process; then
iii) derives the positioning data from the region data.

These procedures allow structured image data information to be effectively transmitted and stored, keeping the quality of the information as perfect as possible.

### Sixth Preferred Embodiment

Fig. 30 is a block diagram illustrating the procedures of the structured image data processing unit 3100 in accordance with the sixth preferred embodiment. Hereinafter, for the same sections as those in the first through fifth embodiments, the explanation will be omitted.

The input data 3111 employed for the embodiment is the same as that for the second preferred embodiment. In addition to the procedures in the second preferred embodiment, the routine of the embodiment determines the region to be divided in consideration of transmit data capacity and user's request.

In Fig. 30, score-attached divided region determining section 3101, using score data, data having information on transmit capacity, and data having information on user's request, determines the region to be divided of the document image.

Image-dividing section 3102 accordingly divides the document-image data into at least one document image.

Image processing section 3103 processes individually each portion of the document-image data processed in the section 3102.

Structured image data renewal section 3104 replaces the document-image data and its positioning data before dividing process with the divided ones to renew the structured image data, then outputs the renewed structured document-image data 3112.

Now will be described the procedures of the structured image data processing method of the embodiment.

As is the case with the second embodiment, when input data including score data is entered, score-attached divided region determining section 3101 calculates an amount of data, according to the data on transmit capacity and the data on user's request. The amount of data will be a target for controlling the amount of input data. The transmit capacity data indicates transmit capacity required to carry the input data to its destination. The data on user's request shows how fast the user requires the data.

Image-dividing section 3102 and image processing section 3103 work in the same ways as the section 101 and the section 103, respectively: the section 3102 divides the document-image data, and section 3103 determines the region to be divided so that the amount of data is controlled to the target amount of data. Besides, in the section 3103, the processing on the regions are differently performed depending on the region characteristics: the two-colors reducing process is done for text, black/white chart regions, the 256-colors reducing process is for color chart, illustration regions, and the scale-down process for photograph regions

Structured image data renewal section 3104 works like the section 104 does.

Through these procedures, the structured image output data 3112 is output.

The procedures of the embodiment, as described above, employs region data indicating the inner structure of document image, score data added to the region, transmit-capacity data, and user's request data for effective processing. Based on these data, each document image region that has been divided document image by region is processed properly, then positioning data is derived from the region data. Thus, these procedures allow structured image data information to be effectively transmitted and stored, keeping the quality of the information as perfect as possible.

Up to this point, the processing in the processing unit of the present invention has been discussed in the embodiments.

A method performing the processing in each section in the embodiments realizes the present invention.

An apparatus, which is provided with means to perform the processing of each section described in the embodiments, can realize the present invention.

Furthermore, a computer program product, which is provided with program code stored on a computer readable medium executing the processing of each section described in the embodiments, can realize the present invention.

In summary, the present invention is characterized as follows.
1) Region data, which indicates the inner structure of the document image by region, is added to the structured image data. This realizes the region-specific processing in the document-image data.
2) In addition to the region data described above, score data is added to the structured image data. This realizes the region-specific processing in the document-image data, respecting for a document creator's intention contained in the score data.
3) In addition to the region data described above, text data is added to the structured image data. This enables to convert a portion of the image data into the text data.
4) In addition to the structured image data, two types of input data are used in the processing. Each of the data has the region data indicating the inner structure of the document image by region. This enables to replace a portion of the image data with another structured image data.
5) In addition to the structured image data, two types of input data are used in the processing. Each of the data has the region data indicating the inner structure of the document image by region, and the score data. This enables to replace a portion of the image data with another structured image data, respecting for a document creator's intention contained in the score data.

The explanation on the present invention is made in the case of processing the document image. However, the present invention is applicable to any images of which portions have various characteristics such as different importance, different colors required, depending on the position of the portion.

## Claims

1. A structured image data processing method that processes data including (i) structured image data composed of document-image data and corresponding positioning data, and (ii) region data indicating a structure of the document-image data, the processing method comprising the steps of:
a) determining a region to be divided of the document-image data according to predetermined dividing information;
b) dividing the document-image data into plural portions according to the region to be divided;
c) processing individually the portions of the document-image data; and
d) renewing the structured image data by replacing the positioning data and the document-image data before processing with positioning data and document-image data after processing.

2. The structured image data processing method of claim 1, wherein the dividing information includes data that affect a difference between the document-image data after a color-reducing process and the document-image data before the color-reducing process so that the difference is smaller than a predetermined value.

3. The structured image data processing method of claim 1, wherein the dividing information includes score data added to at least one of the positioning data and the region data.

4. The structured image data processing method of claim 1, wherein the dividing information includes (i) score data, (ii) a transmit capacity of a transmitting path for transmitting the structured image data, and (iii) an user's request, which are added to at least one of the positioning data and the region data.

5. A structured image data processing method that processes data including (i) structured image data composed of document-image data and corresponding positioning data, (ii) region data indicating a structure of the document-image data, and (iii) replaced media dividing information added to the region data, the processing method comprising the steps of:
a) determining a region to be divided of the document-image data according to the region to be divided;
b) dividing the document-image data into plural portions according to the replaced media dividing information;
c) replacing the document-image data divided according to the replaced media dividing information that is added to the region data corresponding to the divided document image; and
d) renewing the structured image data by replacing the positioning data, the document-image data, and the replaced media dividing information.

6. The structured image data processing method of claim 5, wherein the replaced media dividing information is formed by text data added to a region.

7. A structured image data processing method that processes data including first input data composed of (i) first structured image data containing first document-image data and corresponding positioning data, and (ii) first region data indicating a structure of the first document-image data by regions; and second input data composed of (i) second structured image data containing second document-image data and corresponding positioning data, and (ii) second region data indicating a structure of the second document-image data by regions, the processing method comprising the steps of:
a) determining a region to be divided of the first input data as a region to be renewed, referring to the second input data;
b) dividing the first document-image data into plural portions according to the region to be divided;
c) renewing the divided structured image data of the first input data; and
d) combining the renewed first structured image data with the second structured image data.

8. A structured image data processing method that processes data including first input data composed of (i) first structured image data containing first document-image data and first positioning data, (ii) first region data indicating a structure of the first document-image data by regions, and (iii) first score data added to at least one of the first positioning data and the first region data; and second input data composed of (i) second structured image data containing second document-image data and second positioning data, (ii) second region data indicating a structure of the second document-image data by regions, and (iii) second score data added to at least one of the second positioning data and the second region data, the processing method comprising the steps of:
a) determining a region to be divided of the first input data as a region to be renewed, referring to the second input data;
b) dividing the first document-image data into plural portions according to the region to be divided;
c) renewing the divided structured image data of the first input data; and
d) combining the renewed first structured image data with the second structured image data, using the first and the second score data.

9. An apparatus for a structured image data processing that processes data including (i) structured image data composed of document-image data and corresponding positioning data, and (ii) region data indicating an inner structure of the document-image data, the apparatus comprising:
a) divided region determining means for determining a region to be divided of the document-image data according to predetermined dividing information;
b) image-dividing means for dividing the document-image data into plural portions according to the region to be divided;
c) image processing means for processing individually the divided portions of the document-image data; and
d) structured image renewal means for renewing the structured image data by replacing the positioning data and the document-image data before processing with positioning data and document-image data after processing.

10. The apparatus for the structured image data processing of claim 9, wherein the dividing information includes data that affect a difference between the document-image data after a color-reducing process and the document-image data before the color-reducing process so that the difference is smaller than a predetermined value.

11. The apparatus for the structured image data processing of claim 9, wherein dividing information includes score data added to at least one of the positioning data and region data.

12. The apparatus for the structured image data processing of claim 9, wherein the dividing information includes (i) score data, (ii) a transmit capacity of a transmitting path for transmitting the structured image data, and (iii) an user's request, which are added to at least one of the positioning data and the region data.

13. The apparatus for the structured image data processing that processes data including (i) structured image data composed of document-image data and corresponding positioning data, (ii) region data indicating a structure of the document-image data, and (iii) replaced media dividing information added to the region data, the apparatus comprising:
a) divided region determining means for determining a region to be divided of the document-image data according to the replaced media dividing information;
b) image-dividing means for dividing the document-image data into plural portions according to the region to be divided;
c) replacing means for replacing the divided document-image data with the replaced media dividing information that is added to the region data corresponding to the divided document image; and
d) structured image renewal means for renewing the structured image data by replacing the positioning data, the document-image data, and the replaced media dividing information.

14. The apparatus for the structured image data processing of claim 13, wherein the replaced media dividing information is formed by text data added to a region.

15. An apparatus for a structured image data processing that processes data including first input data composed of (i) first structured image data containing first document-image data and corresponding positioning data, and (ii) first region data indicating a structure of the first document-image data by regions; and second input data composed of (i) second structured image data containing second document-image data and corresponding positioning data, and (ii) second region data indicating a structure of the second document-image data by regions, the apparatus comprising:
a) divided region determining means for determining a region to be divided of the first input data as a region to be renewed, referring to the second input data;
b) image-dividing means for dividing the first document-image data into plural portions according to the region to be divided;
c) structured image data renewal means for renewing the divided structured image data of the first input data; and
d) structured image data composition means for combining the renewed first structured image data with the second structured image data.

16. An apparatus for a structured image data processing that processes data including first input data composed of (i) first structured image data containing first document-image data and first positioning data, (ii) first region data indicating a structure of the first document-image data by regions, and (iii) first score data added to at least one of the first positioning data and the first region data; and second input data composed of (i) second structured image data containing second document-image data and second positioning data, (ii) second region data indicating a structure of the second document-image data by regions, and (iii) second score data added to at least one of the second positioning data and the second region data, the apparatus comprising:
a) score-attached divided region determining means for determining a score-attached region to be divided of the first input data as a region to be renewed, referring to the second input data;
b) image-dividing means for dividing the first document-image data into plural portions according to the region to be divided;
c) structured image data renewal means for renewing the divided structured image data of the first input data; and
d) score-attached structured image data composition means for combining the renewed first structured image data with the second structured image data, using the first and the second score data.

17. A computer program product for a structured image data processing that processes data including (i) structured image data composed of document-image data and corresponding positioning data, and (ii) region data indicating an inner structure of the document-image data, the program product comprising:
a) a program code for determining a region to be divided of the document-image data according to predetermined dividing information;
b) a program code for dividing the document-image data into plural portions according to the region to be divided;
c) a program code for processing individually the portions of the document-image data; and
d) a program code for renewing the structured image data by replacing the positioning data and the document-image data before processing with positioning data and document-image data after processing.

18. The computer program product for the structured image data processing of claim 17, wherein the dividing information includes data that affect a difference between the document-image data after a color-reducing process and the document-image data before the color-reducing process so that the difference is smaller than a predetermined value.

19. The computer program product for the structured image data processing of claim 17, wherein the dividing information includes score data added to at least one of the positioning data and the region data.

20. The computer program product for the structured image data processing of claim 17, wherein the dividing information includes (i) score data, (ii) a transmit capacity of a transmitting path for transmitting the structured image data, and (iii) an user's request, which are added to at least one of the positioning data and the region data.

21. A computer program product for a structured image data processing that processes data including (i) structured image data composed of document-image data and corresponding positioning data, (ii) region data indicating an inner structure of the document-image data, and (iii) replaced media dividing information added to the region data, the program product comprising:
a) a program code for determining a region to be divided of the document-image data according to the replaced media dividing information;
b) a program code for dividing the document-image data into plural portions according to the region to be divided;
c) a program code for replacing the divided document-image data with the replaced media dividing information added to the region data corresponding to the divided document image; and
d) a program code for renewing the structured image data by replacing the positioning data, the document-image data, and the replaced media dividing information.

22. The computer program product for the structured image data processing of claim 21, wherein the replaced media dividing information is formed by text data added to a region.

23. A computer program product for a structured image data processing that processes data including first input data composed of (i) first structured image data containing first document-image data and corresponding positioning data, and (ii) first region data indicating a structure of the first document-image data by regions; and second input data composed of (i) second structured image data containing second document-image data and corresponding positioning data, and (ii) second region data indicating a structure of the second document-image data by regions, the program product comprising:
a) a program code for determining a region to be divided of the first input data as a region to be renewed, referring to the second input data;
b) a program code for dividing the first document-image data into plural portions according to the region to be divided;
c) a program code for renewing the divided structured image data of the first input data; and
d) a program code for combining the renewed first structured image data with the second structured image data.

24. A computer program product for a structured image data processing that processes data including first input data composed of (i) first structured image data containing first document-image data and first positioning data, (ii) first region data indicating a data structure of the first document-image data by regions, and (iii) first score data added to at least one of the first positioning data and the first region data; and second input data composed of (i) second structured image data containing second document-image data and second positioning data, (ii) second region data indicating a data structure of the second document-image data by regions, and (iii) second score data added to at least one of the second positioning data and the second region data, the program product comprising:
a) a program code for determining a region to be divided of the first input data as a region to be renewed, referring to the second input data;
b) a program code for dividing the first document-image data into plural portions according to the region to be divided;
c) a program code for renewing the divided structured image data of the first input data; and
d) a program code for combining the renewed first structured image data with the second structured image data, using the first and the second score data.
